# EUROPEAN PATENT SPECIFICATION

(11) **EP 1 286 045 B1**
(45) Date of publication and mention of the grant of the patent: **27.02.2008**
(21) Application number: 02018196.2
(22) Date of filing: 20.08.2002
(51) Int. Cl.: F02N 11/04

(54) **Vehicular starting and charging rotary electric machine**
Elektrische Generator-Anlasservorrichtung für Kraftfahrzeuge
Système générateur-démarreur électrique pour voiture automobile

(30) Priority: 20.08.2001 JP 2001248996
(43) Date of publication of application: 26.02.2003
(73) Proprietor: MITSUBISHI DENKI KABUSHIKI KAISHA, Chiyoda-ku Tokyo 100-8310 (JP)
(72) Inventor: Oohashi, Atsushi, Mitsubishi Denki K. K., Tokyo 100-8310 (JP); Kusumoto, Katsuhiko, Mitsubishi Denki K. K., Tokyo 100-8310 (JP); Morikaku, Hideki, Mitsubishi Elec. Eng. Denki K K, Tokyo 100-0004 (JP); Utsumi, Yoshinobu, Mitsubishi Elec. Eng. Denki K K, Tokyo 100-0004 (JP)
(74) Representative: HOFFMANN EITLE

(56) References cited:
- EP-A- 0 391 386
- WO-A-02/060711
- US-A- 4 948 997

## Description

### BACKGROUND OF THE INVENTION

### 1. Field of the Invention

The present invention relates to a vehicular starting and charging rotary electric machine integrating a starting motor and a charging generator.

### 2. Description of the Related Art

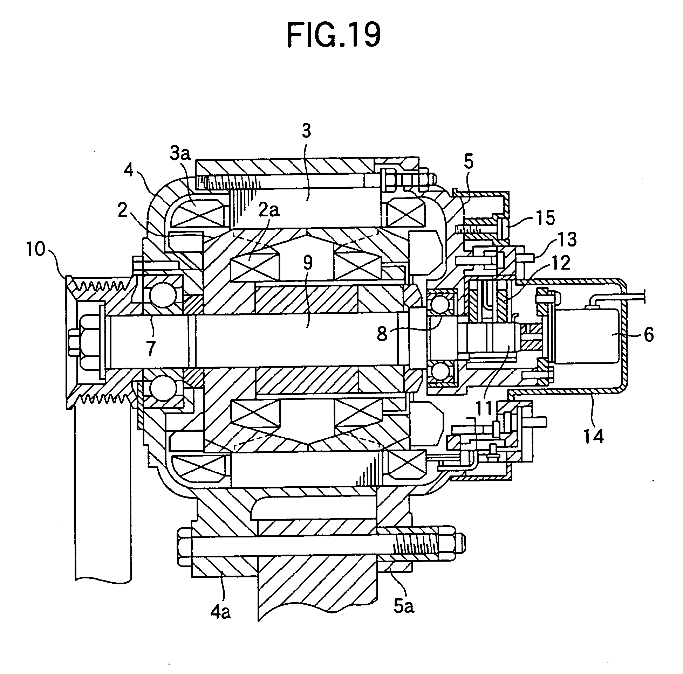

Fig. 19 is a sectional view showing a vehicular starting and charging rotary electric machine disclosed in, for example, JP-A-8-14145. In the drawing, a motor generator 1 includes a rotor 2 wound with a field winding 2a, a stator 3 wound.. three-phase stator winding 3a, front bracket 4 and rear bracket 5 containing the rotor 2 and stator 3, and a magnetic pole position detecting sensor 6 detecting a magnetic pole position of the rotor 2.

The rotor 2 includes a rotating shaft 9 rotatably supported by the front bracket 4 and rear bracket 5 through bearings 7, 8. An end portion of the rotating shaft 9 is projected from the front bracket 4 and a pulley 10 is fixed to a front end portion thereof. Further, other end portion of the rotating shaft 9 is projected from the rear bracket 5 and a front end portion thereof is integrated with two pieces of slip rings 11. The field wiring 2a wound around the rotor 2 is connected to a field terminal 13 fixed to the rear bracket 5 via the slip rings 11 and brushes 12.

The magnetic pole position detecting sensor 6 is coaxially installed with the rotating shaft 9 at other end portion of the rotating shaft 9 for detecting a current position of the magnetic pole of the rotating shaft 9 (rotor 2). Further, in addition to other than the magnetic pole position detecting sensor 6, an outer side of the rear bracket 5 is provided with the brushes 12 brought into sliding contact with the slip rings 11 and covered by a rear cover 14. The rear cover is fixed to the rear bracket 5 by a screw 15.

According to the vehicular starting and charging rotary electric machine according to the.related art as described above, in order to interchange the brush 12, there is carried out a procedure of removing a rear cover 14 from the rear bracket 5 by detaching a screw 15, taking out the brush 12 after taking out the magnetic pole position detecting sensor 6, interchanging the brush 12 by a new one of the brush 12 and thereafter attaching the magnetic pole position detecting sensor 6 again. However, in order to promote detection accuracy, the magnetic pole position detecting sensor 6 is required high accuracy in a position of attachment relative to the magnetic pole of the rotor 2. Therefore, there is a problem that once the magnetic pole position detecting sensor 6 is detached, operation of attaching the magnetic position detecting sensor 6 again and readjusting a position of installing the magnetic pole position detecting sensor 6 is very troublesome to make operation of interchanging the brush 12 difficult.

### SUMMARY OF THE INVENTION

The invention has been carried out in order to resolve the above-described problem and it is an object thereof to provide a vehicular starting and charging rotary electric machine capable of easily carrying out operation of interchanging a brush.

According to a first aspect of the invention, there is provided a vehicular starting and charging rotary electric machine serving as an electric machine or generating machine, having a rotor, a stator, a bracket, a brush, and a magnetic pole position detecting sensor. The rotor has a field winding. The stator has a stator winding. The bracket supports the rotor and the stator. One end of the brush is brought into contact with the rotor to supply field current to the field winding of the rotor. The magnetic pole position detecting sensor is arranged coaxially with a rotating shaft of the rotor, for detecting a magnetic pole position of the rotor and functioning. The magnetic pole position detecting sensor is integrally fixed to the bracket such that the magnetic pole position detecting sensor 6 is integrally fixed to the bracket 5 such that the brush 12 is removable without detaching the magnetic pole position detecting sensor 6 from the bracket 5.

Accordingly, the brush can be removed without detaching the magnetic pole position detecting sensor from the bracket, it is not necessary readjust the magnetic pole position detecting sensor by reattachment thereof and operation of interchanging the brush can easily be carried out.

### BRIEF DESCRIPTION OF THE DRAWINGS

Fig. 1 is a sectional view showing a vehicular starting and charging rotary electric machine according to Embodiment 1 of the invention.
Fig. 2 is a front view of the vehicular starting and charging rotary electric machine according to Embodiment 1 of the invention.
Fig. 3 is a sectional view showing a vehicular starting and charging rotary electric machine according to Embodiment 2 of the invention.
Fig. 4 is a sectional view enlarging portions of attaching a magnetic pole position detecting sensor and a brush of a vehicular starting and charging rotary electric machine according to Embodiment 3 of the invention.
Fig. 5 is a sectional view enlarging portions of attaching a magnetic pole position detecting sensor and a brush of a vehicular starting and charging rotary electric machine according to Embodiment 4 of the invention.
Fig. 6 is a sectional view enlarging a portion of attaching a magnetic pole position detecting sensor of a vehicular starting and charging rotary electric machine according to Embodiment 5 of the invention.
Fig. 7 is a perspective view showing a stator of a rotary electric machine according to Embodiment 6 of the invention.
Fig. 8 is a perspective view showing a conductor segment for constituting a stator winding of the rotary electric machine according to Embodiment 6 of the invention.
Fig. 9 is an explanatory view of a method of fabricating the stator winding of the rotary electric machine according to Embodiment 6 of the invention.
Fig. 10 is an explanatory view for explaining the method of fabricating the stator winding of the rotary electric machine according to Embodiment 6 of the invention
Fig. 11 is an explanatory view for explaining the method of fabricating the stator winding of the rotary electric machine according to Embodiment 6 of the invention.
Fig. 12 is a perspective view showing a stator of a rotary electric machine according to Embodiment 7 of the invention.
Fig. 13 is an explanatory view for explaining a method of fabricating a stator winding of the rotary electric machine according to Embodiment 7 of the invention.
Fig. 14 is an explanatory view for explaining the method of fabricating the stator winding of the rotary electric machine according to Embodiment 7 of the invention.
Fig. 15 is an explanatory view for explaining the method of fabricating the stator winding of the rotary electric machine according to Embodiment 7 of the invention.
Fig. 16 is an explanatory view for explaining the method of fabricating the stator winding of the rotary electric machine according to Embodiment 7 of the invention.
Fig. 17 is an explanatory view for explaining the method of fabricating the stator winding of the rotary electric machine according to Embodiment 7 of the invention.
Fig. 18 is an explanatory view for explaining the method of fabricating the stator winding of the rotary electric machine according to Embodiment 7 of the invention
Fig. 19 is a sectional view showing a vehicular starting and charging rotary electric machine according to the related art

### DETAILED DESCRIPTION OF THE PREFERRED EMBODIMENTS

### Embodiment 1

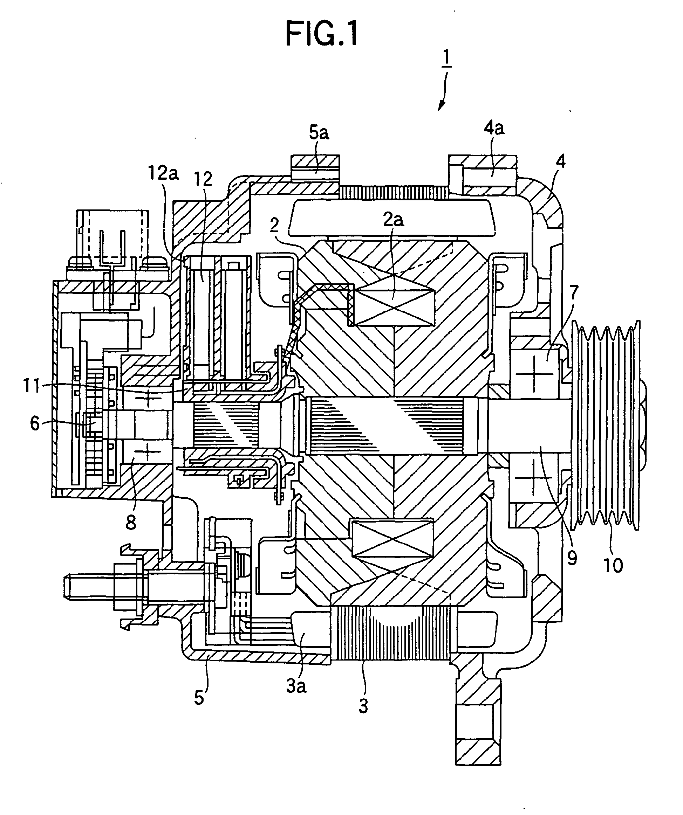

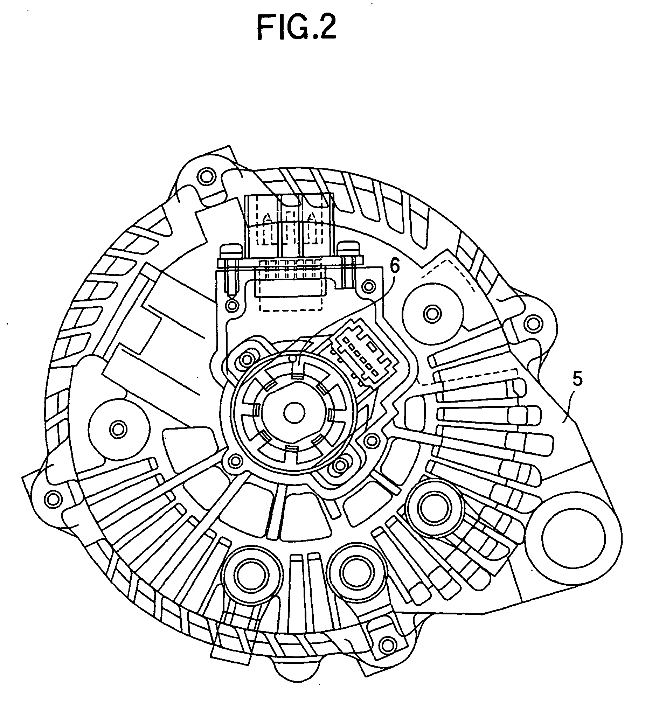

Fig. 1 is a sectional view showing a vehicular starting and charging rotary electric machine according to Embodiment 1 of the invention. Fig. 2 is a front view viewing the vehicular starting and charging rotary electric machine in Fig. 1 from a side of a rear bracket thereof. In the drawings, a motor generator 1 includes a rotor 2 wound with a field winding 2a, a stator 3 wound with a three-phase stator winding 3a, a front bracket 4 and a rear bracket 5 containing the rotor 2 and stator 3, and a magnetic pole position detecting sensor 6 for detecting a rotational state of the rotor 2.

The rotor 2 has a rotating shaft 9 both end portions of which are rotatably supported by the front bracket 4 and the rear bracket 5 through bearings 7 and 8, respectively. One end portion of the rotating shaft 9 is projected from the front bracket 4 and a front end portion thereof is fixed with a pulley 10. Further, the other end portion of the rotating shaft 9 is integrated with two pieces of slip rings 11.

The magnetic pole position detecting sensor 6 arranged outside of the rear bracket is installed coaxially with the rotating shaft 9 on the other end side of the rotating shaft 9 and detects the rotating shaft 9, that is, a magnetic pole position of the rotor 2. Further, on an inner side of the rear bracket 5, brushes 12 brought into sliding contact with the slip rings 11 are installed to be held by a brush holder 12a.

Next, an explanation will be given of the operation. When field current is supplied to the field winding 2a via the brushes 12 and the slip rings 11, a magnetic flux is produced at a magnetic pole of the rotor 2. In operating as the motor, under such state, by supplying multi-phase alternating current to the multi-phase stator windings 3a, rotational force is produced in the rotor 2. The rotational force is transmitted to an engine side via the rotating shaft 9, the pulley 10 and a not illustrated belt (may be a chain or a toothed belt) to thereby start the engine.

After finishing to operate as the motor, the rotor 2 is driven by the engine via the pulley 10 and the rotating shaft 9, a rotary magnetic field is produced by the rotor 2, and power is produced at the multi-phase stator winding 3a to thereby operate as the generator.

In such a vehicular starting and charging rotary electric machine, according to the embodiment, the magnetic pole position detecting sensor 6 is arranged to be integrally attached to the rear bracket 5. In interchanging the brush 12, the brush 12 is taken out by removing the rear bracket 5. According to the embodiment, the magnetic pole position detecting sensor 6 is integral with the rear bracket 5 and therefore, the brush 12 can be removed without detaching the magnetic pole position detecting sensor 6

Further, in assembling, a positional relationship between the stator 3 and the rear bracket 5 can be positioned by a hole 4a on a side of the front bracket 4 and a screw hole 5a on a side of the side of the rear bracket 5. The holes 4a and 5a are to be inserted a through bolt (not shown) to fasten and fix the front bracket 4 and rear bracket 5 sandwiching the stator 3 in an axial direction. Therefore, it is not necessary to readjust the magnetic pole position detecting sensor 6 by reattachment thereof and operation of interchanging the brush 12 can easily be carried out.

### Embodiment 2

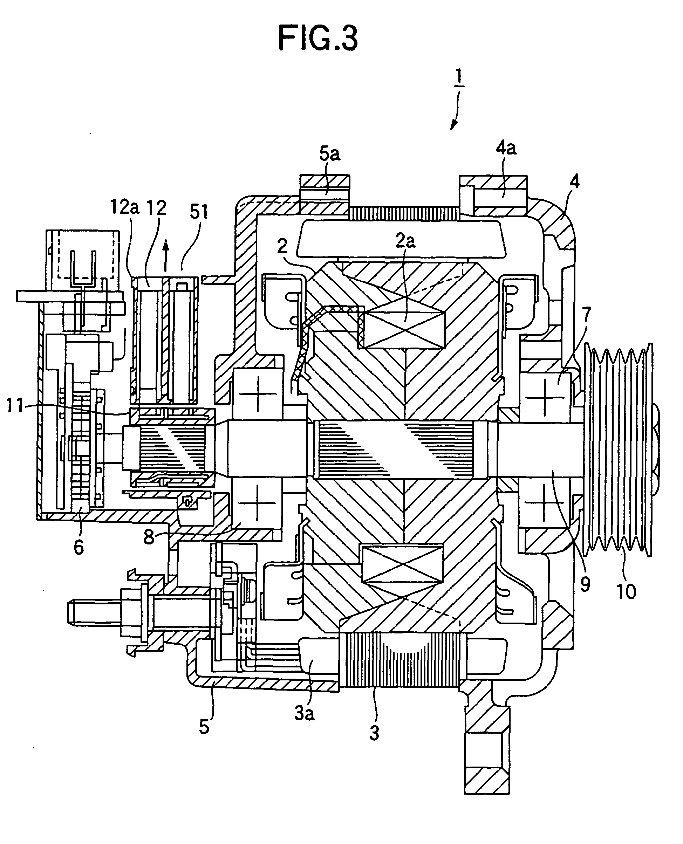

Fig. 3 is a sectional view showing a vehicular starting and charging rotary electric machine according to Embodiment 2 of the invention. Both of the magnetic pole position detecting sensor 6 and the brush 12 are arranged at outside of the rear bracket 5. Further, the rear bracket 5 has an opening portion 51 for taking out the brush 12 in a diameter direction. Although the magnetic pole position detecting sensor 6 is arranged on further outer side of the brush 12 in the axial direction, when the brush 12 is taken out from the opening portion 51 of the rear bracket 5 along with the brush holder 12a, only the brush 12 can be removed without being influenced by a state of installing the magnetic pole position detecting sensor 6. Further, a similar effect is achieved naturally by applying the opening portion 51. to Embodiment 1, described above.

### Embodiment 3

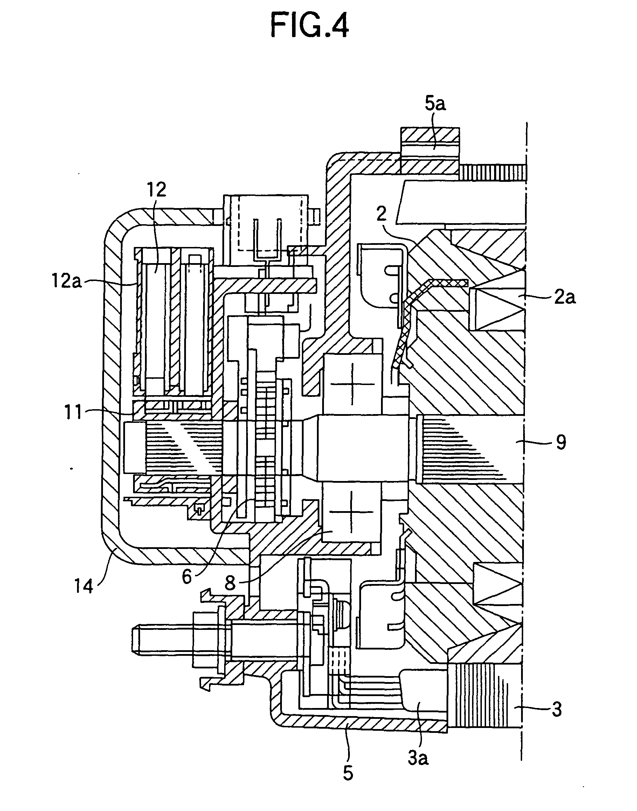

Fig. 4 is a sectional view enlarging portions of attaching the magnetic pole position detecting sensor and the brush of a vehicular starting and charging rotary electric machine according to Embodiment 3 of the invention. Both of the magnetic pole position detecting sensor 6 and the brush 12 are arranged on the outer side of the rear bracket 5. Further, the brush 12 is arranged on further outer side of the magnetic pole position detecting sensor 6 in the axial direction and a rear cover 14 is provided to surround the magnetic pole position detecting sensor 16 and the brush 12. The brush 12 is arranged on the outer side of the rear bracket 5 and arranged on further outer side of the magnetic pole position detecting sensor 6 in the axial direction and therefore, the brush 12 can be taken out by only detaching the rear cover 14 and operation of interchanging the brush 12 can easily be carried out.

### Embodiment 4

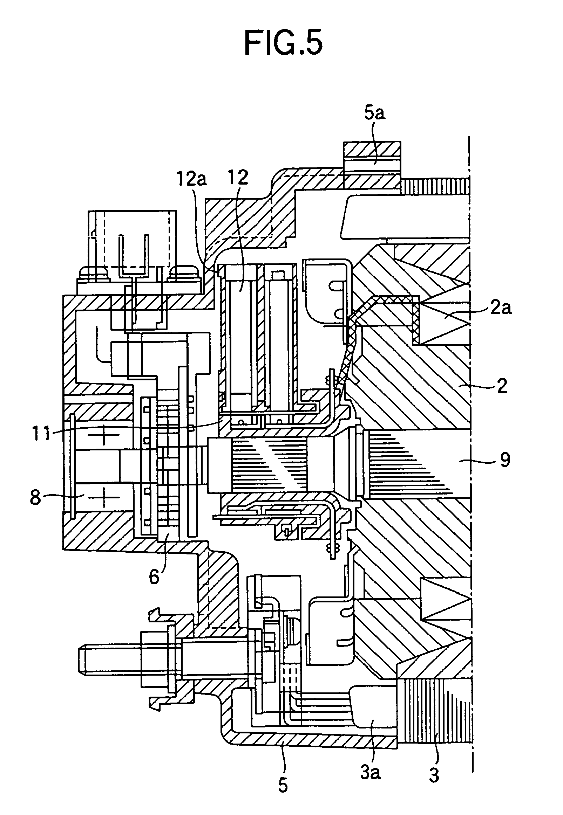

Fig. 5 is a sectional view enlarging portions of attaching the magnetic pole position detecting sensor and the brush of a vehicular starting and charging rotary electric machine according to Embodiment 4 of the invention. Both of the magnetic pole position detecting sensor 6 and the brush 12 are arranged on an inner side of the rear bracket 5. The magnetic pole position detecting sensor 6 is integral with the rear bracket 5 and therefore, in interchanging the brush 12, even when the rear bracket 5 is removed, the brush 12 can be removed without detaching the magnetic pole position detecting sensor 6 from the bracket.

Further, in assembling, the positional relationship between the stator 3 and the rear bracket 5 can be positioned by the hole 4a on the side of the front bracket 4 and the screw hole 5a on the side of the rear bracket 5 of a through bolt, not illustrated, for fastening to fix the front bracket 4 and the rear bracket 5 sandwiching the stator 3 in the axial direction and therefore, it is not necessary to readjust the magnetic pole position detecting sensor 6 by reattachment thereof and operation of interchanging the brush 12 can easily be carried out. Further, since the brush 12 is arranged on the inner side of the rear bracket 12 and therefore, the brush 12 can be protected against an external factor.

Further, when the brush 12 is taken out from the diameter direction along with the brush holder 12a by providing the opening portion 51 of the rear bracket 5 according to Embodiment 2, only the brush 12 can be removed without removing the rear bracket 5 and the front bracket 4 and operation of interchanging the brush can be carried out further easily.

### Embodiment 5

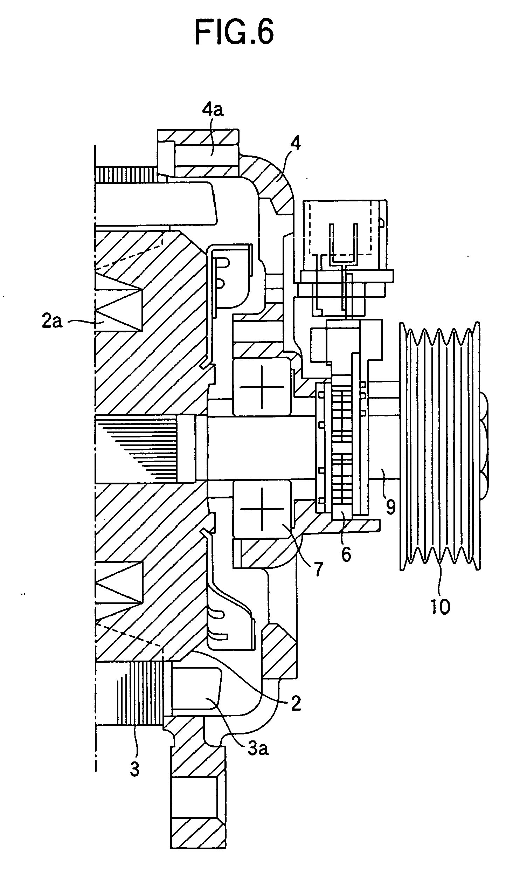

Fig. 6 is a sectional view enlarging a portion of attaching the magnetic pole position detecting sensor of as vehicular starting and charging rotary electric machine according to Embodiment 5 of the invention. Although according to the above-described respective embodiments, the magnetic pole position detecting sensor 6 and the brush 12 are arranged at the end portion of the rotary shaft 9 on a side opposed to the pulley 10, according to the embodiment, the brush 12 is arranged on a side opposed to the pulley 10 and the magnetic pole position detecting sensor 6 is arranged at the end portion of the rotating shaft 9 on the side of the pulley 10, respectively. Thereby, the magnetic pole position detecting sensor 6 and the brush 12 are arranged not to be proximate to each other but to be remote from each other and therefore, even when a worn powder of the brush 12 or the like is scattered, the magnetic pole position detecting sensor 6 is not influenced thereby and the brush 12 can be interchanged without being influenced by the state of installing the magnetic pole position detecting sensor 6. Further, although according to the embodiment, an explanation has been given of an example of arranging the brush 12 on the side opposed to the pulley 10 and arranging the magnetic pole position detecting sensor 6 on the side of the pulley 10, a similar effect: is naturally achieved even when the arrangement is reversed.

### Embodiment 6

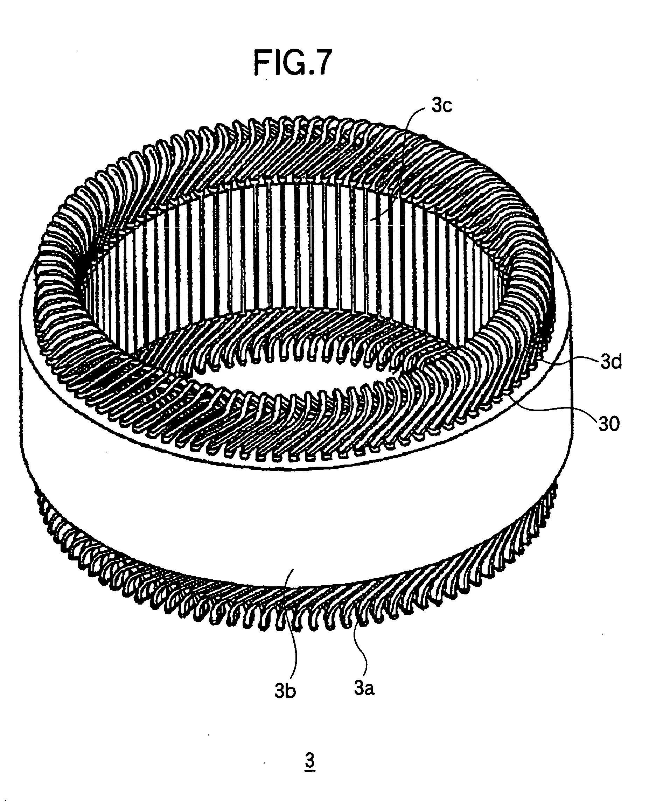

Fig. 7 is a perspective view showing the stator of a vehicular starting and charging rotary electric machine according to Embodiment 6 of the invention. As shown in the drawing, the stator 3 is provided with a stator core 3b in a shape of a circular cylinder formed with a plurality of slots 3d extended in the axial direction by a predetermined pitch in a peripheral direction thereof, the stator winding 3a wound around the stator core 3b and insulating paper 3 mounted in the respective slots 3d for electrically insulating the stator winding 3a and the stator core 3b. According to the stator 3 shown in the drawing, since the coil end of the stator winding 3a is aligned, the coil end is shortened and a total length of the vehicular starting and charging rotary electric machine prolonged by installing the magnetic pole position detecting sensor 6 can be shortened.

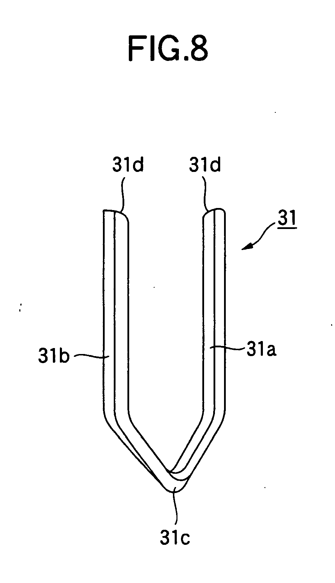

Further, in order to realize the stator 3 of respective pole and respective phase 2, it is preferable to constitute the stator winding 3a by a conductor segment. Fig. 8 is a perspective view showing the conductor segment constituting the stator winding 5, showing a state before being integrated to the stator core 3b. In the drawing, the conductor segment 31 is formed substantially in a U-like shape by folding to bend a rod-like or a plate-like metal material (for example, copper) at a turn portion 31c and is constituted to include an inner layer side conductor 31a arranged from the turn portion 31c to an inner peripheral side of the slot 3d and an outer layer side conductor 31b arranged from the turn portion 31c to an outer peripheral side of the slot 3d.

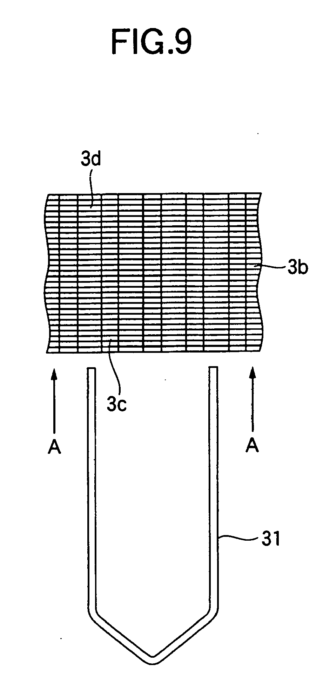

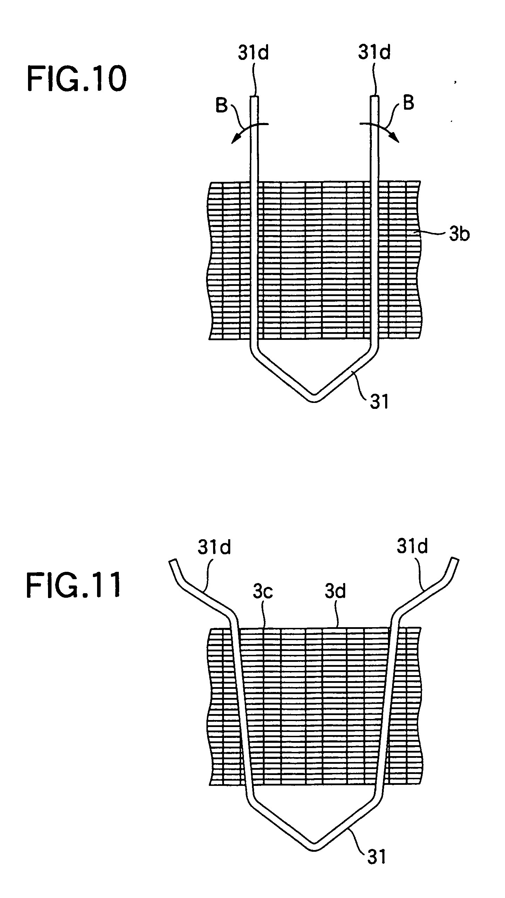

Fig. 9 through Fig. 11 are explanatory views for explaining a method of fabricating the stator winding 3a. Further, the insulating paper 30 is omitted here. The insulating paper 30 is formed in a ring-like shape for one slot and is inserted into the slot 3d along the axial direction. After finishing to integrate the insulating paper 30 to the slot 3d, as shown by Fig. 9, the conductor segment 31 is inserted to the slog 3d in the axial direction as shown by an arrow mark A. After projecting an end portion 31d of the inserted conductor segment 31 from other side face of the slot 3d, as shown by Fig. 10, the end portion 31d is respectively bent in the peripheral direction of the stator core 3b (twisting) as shown by an arrow mark B to thereby bring about a state of Fig. 11 and is connected to the end portion 31d of the conductor segment 31 inserted into a different one of the slot 3d.

Further, according to the conductor segment 31, a similar effect is naturally achieved by adopting various conductor segments substantially in a J-like shape, substantially in a I-like shape and the like other than the substantially U-like shape shown in Fig. 8.

### Embodiment 7

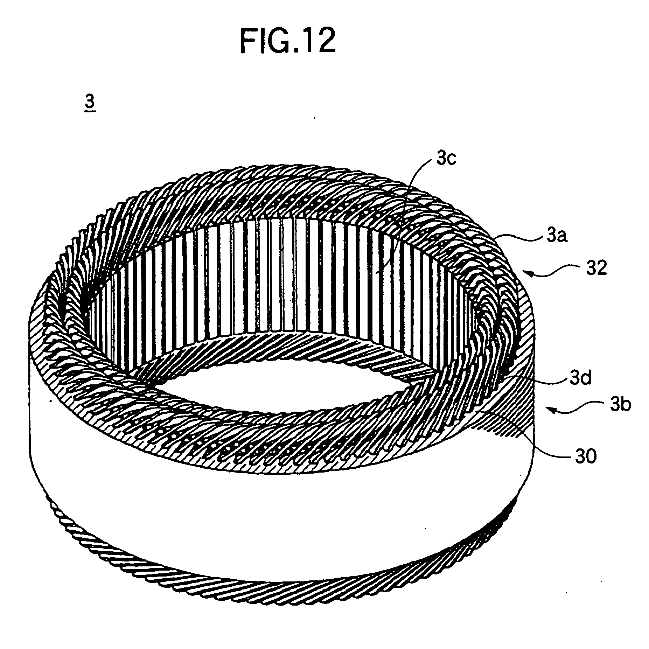

Although according to Embodiment 6, mentioned above, an explanation has been given of constructing the constitution by using the conductor segment 31 as the stator winding 3a, the stator winding 3a may be constituted by a single wire line (continuous line). Fig. 12 is a perspective view showing a stator of a rotary electric machine according to Embodiment 7 of the invention.

As shown by Fig. 12, the stator 3 is provided with the stator core 3b comprising a laminated layer core in a shape of a circular cylinder formed with a plurality of the slots 3b extended in the axial direction at a predetermined pitch in the peripheral direction, the stator wiring 3a wound around the stator core 3b and the insulating paper 30 mounted in the respective slots 3d for electrically insulating the stator winding 3a and the stator core 3b. Further, the stator winding 3a is provided with a plurality of windings in each of which a single piece of the wire line 32 is folded back at outside of the slot 3d on an end face side of the stator core 3b and is wound by wave winding to alternately take an inner layer and an outer layer in a slot depth direction at inside of the slot 3d at every predetermined number of slots.

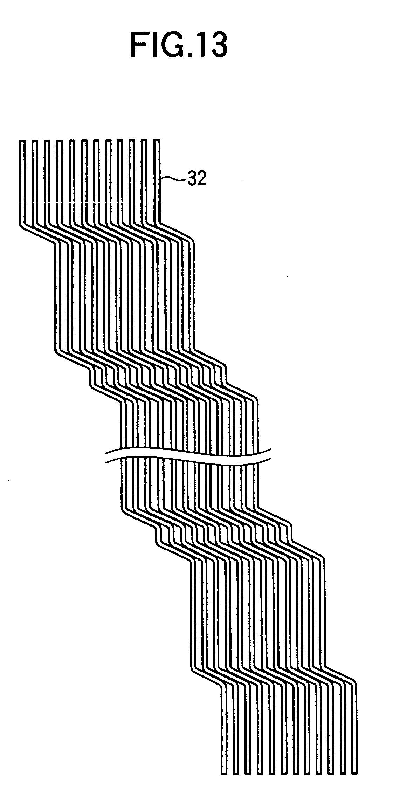

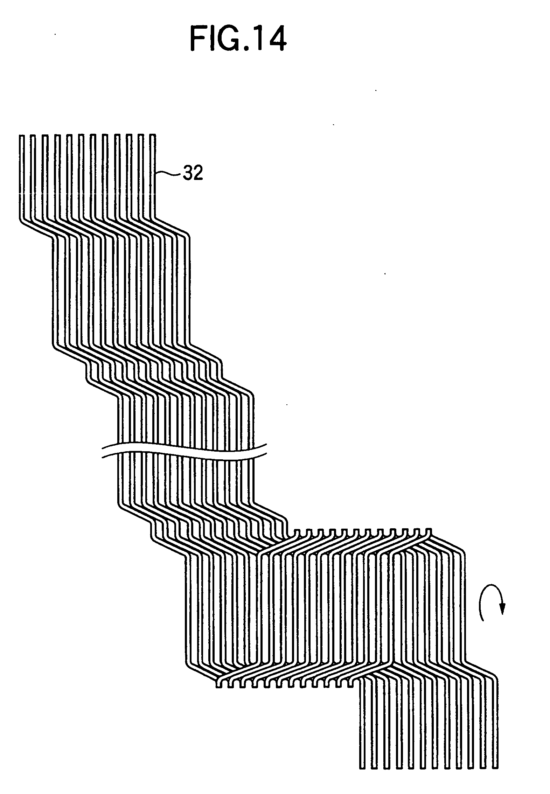

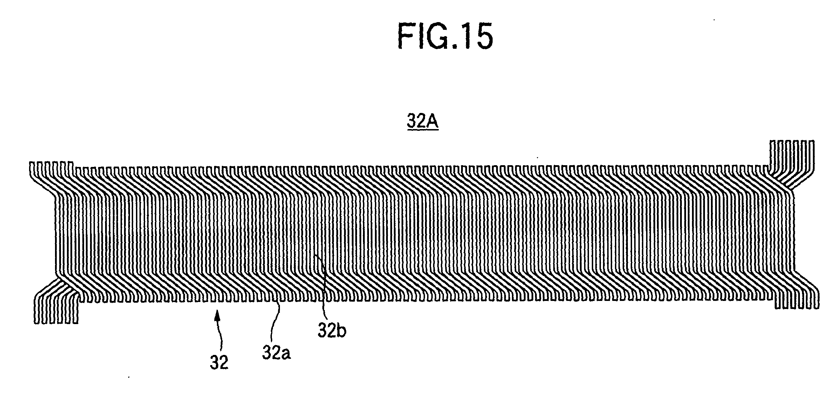

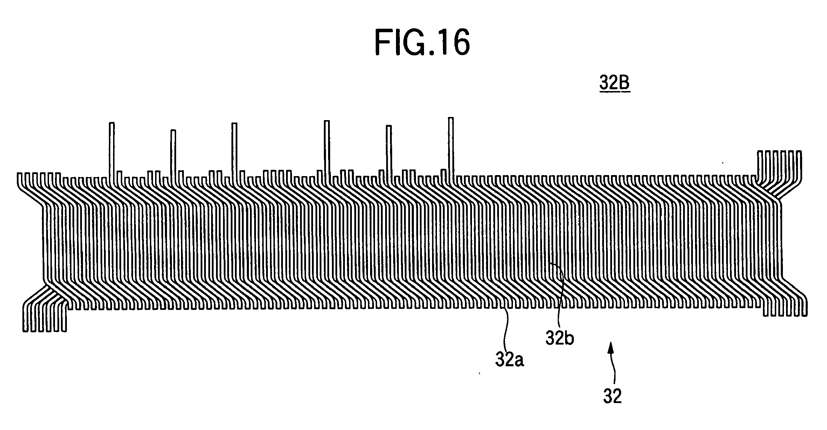

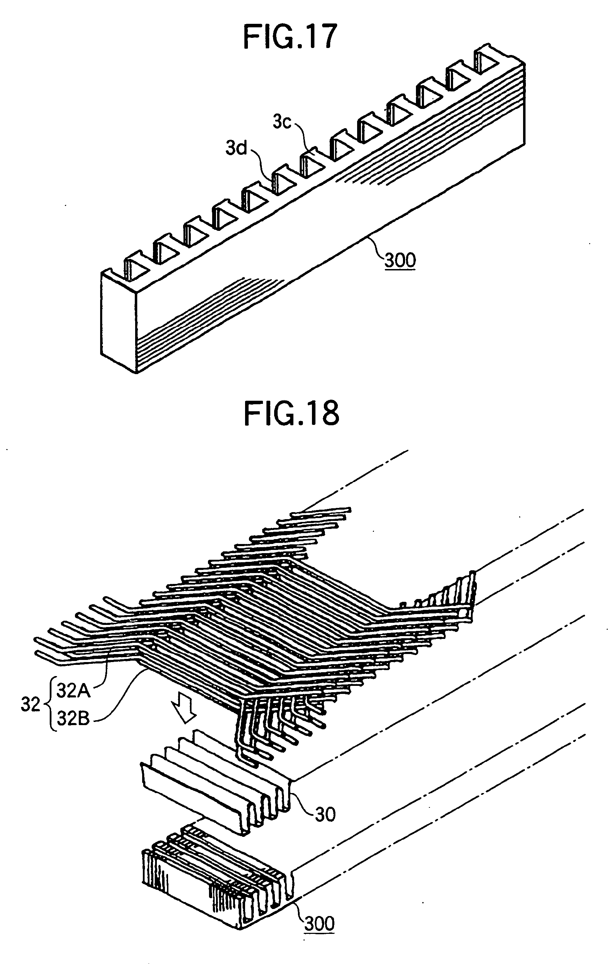

Next, a specific explanation will be given of a method of fabricating the stator 3 in reference to Fig. 13 through Fig. 18. First, as shown by Fig. 13, 12 pieces of long wire lines 32 are formed in a thunderbolt-like shape by folding to bend the wire lines simultaneously on the same plane. Successively, as shown by an arrow mark in.Fig. 14, the wire lines are.folded in a right angle direction by a jig to thereby fabricate a wire line group 32A as shown by Fig. 15. Further, similarly, as shown by Fig. 16, a wire line group 32B having a crossover line and a lead line is fabricated. The wire line groups 32A and 32B are constituted by aligning 6 pairs of wire line pairs aligned with two pieces of wire lines 32 formed in such a pattern by being shifted by 6 slot pitch as shown by Fig. 18 to overlap straight line portions 32B, by shifting by 1 slot pitch. Further, 6 pieces of end portions of the wire line 32 are extended to both sides of both ends of the wire line group 32A and 32B. Further, turn portions 32a are arranged to align on both side portions of the wire line groups 32A and 32B.

Meanwhile, there are laminated a predetermined number of sheets of main laminated layer plates each formed with slots 3d and tees 3c in a trapezoidal shape by a predetermined pitch, predetermined positions of outer peripheral portions thereof are welded by laser welding in a laminating direction to thereby fabricate a laminated layer core 300 substantially in a parallelepiped as shown by Fig. 17.

Further, the insulating paper 30 and the two wire line groups 32A and 32B are laminated to mount to the laminated layer core 300. Successively, the laminated layer core 300 is rounded and end faces thereof are brought into contact to each other and welded to each other to thereby provide the stator 3 in the shape of the circular cylinder as shown in Fig. 12.

The stator winding 3a according to the embodiment is the single wire line 32 (continuous line) and therefore, a number of bond portions is smaller than that by forming the stator winding 3a by bonding the conductor segments 31 as in Embodiment 6 and therefore, the coil end of the stator winding 3a can be lowered and the stator 3 having a short total length can easily be fabricated.

As described above, according to a first aspect of the invention, there is provided a vehicular starting and charging rotary electric machine including a rotor having a field winding, a stator having a stator winding, a bracket for supporting the rotor and the stator, a brush one end of which is brought into contact with the rotor for supplying field current to the field winding of the rotor, and a magnetic pole position detecting sensor arranged coaxially with a rotating shaft of the rotor for detecting a magnetic pole position of the rotor and functioning as a motor or a generator, and the magnetic pole position detecting sensor is integrally fixed to the bracket. Therefore, the brush can be removed without detaching the magnetic pole position detecting sensor from the bracket, it is not necessary readjust the magnetic pole position detecting sensor by reattachment thereof and operation of interchanging the brush can easily be carried out.

Further, according to a second aspect of the invention, the magnetic pole position detecting sensor is arranged on an outer side in an axial direction of the brush and therefore, the brush can be removed without being influenced by the state of installing the magnetic pole position detecting sensor and there is achieved an effect capable of easily carrying out operation of interchanging the brush.

Further, according to a third aspect of the invention described, the magnetic pole position detecting sensor is arranged at one end of a rotor shaft and the brush is arranged at other end thereof, respectively and therefore, the brush can be removed without being influenced by the state of installing the magnetic pole position detecting sensor and there is achieved an effect capable of easily carrying out operation of interchanging the brush.

Further, according to a fourth aspect of the invention described, the brush is arranged on an inner side of the bracket and therefore, there is achieved an effect capable of protecting the brush against an external factor.

Further, according to a fifth aspect of the invention, the brush is arranged on an outer side of the bracket and therefore, the brush can be removed without disassembling the bracket and there is achieved an effect capable of easily carrying out operation of interchanging the brush.

Further, according to a sixth aspect of the invention, a brush holder fixed to the bracket for holding the brush is constituted to be capable of interchanging the brush attachably and detachably from a diameter direction thereof and therefore, only the brush can be removed without being influenced by the state of installing the magnetic pole position detecting sensor and there is achieved an effect of capable of easily carrying out operation of interchanging the blush.

Further, according to a seventh aspect of the invention described, the stator winding of the stator includes a coil end extended outwardly from an end face of a stator core and the coil end is arranged by aligning the stator core in a peripheral direction and therefore, the coil end is lowered and there is achieved an effect capable of shortening a total length of the rotary electric machine prolonged by an amount of the magnetic pole position detecting sensor.

Further, according to an eighth aspect of the invention described, the stator winding of the stator is constituted by connecting a plurality of conductor segments and therefore, there is achieved an effect capable of fabricating the stator having a short total length simply and conveniently.

Further, according to a ninth aspect of the invention, the stator winding of the stator includes a plurality of windings folded back at outside of a slot on a side of the end face of the stator core and wound to alternately take an inner layer and an outer layer in a slot depth.direction at inside of the slot at every predetermined number of the slots and portions of turning the coil wires folded back at outside of the slots on the side of the end face of the stator core, are aligned in the peripheral direction to constitute a group of the coil ends and therefore, there can be constructed a constitution having a small number of bond portions in the stator winding and there is achieved an effect capable of fabricating the stator having the short total length simply and conveniently.

## Claims

1. A vehicular starting and charging rotary electric machine (1) serving as an electric machine or generating machine, comprising:
a rotor (2) having a field winding (2a);
a stator (3) having a stator winding (3a);
a bracket (5) for supporting the rotor (2) and the stator (3);
a brush (18) one end of which is brought into contact with the rotor (2) for supplying field current to the field winding (2a) of the rotor (2); and
a magnetic pole position detecting sensor (6) arranged coaxially with a rotating shaft (9) of the rotor (2), for detecting a magnetic pole position of the rotor (2) and functioning,
**characterized in that** the magnetic pole position detecting sensor (6) is integrally fixed to the bracket (5) such that the brush (12) is removable without detaching the magnetic pole position detecting sensor (6) from the bracket (5).

2. The vehicular starting and charging rotary electric machine according to claim 1, **characterized in that** the magnetic pole position detecting sensor (6) is arranged on an outer side in an axial direction of the brush (12).

3. The vehicular starting and charging rotary electric machine according to claim 1, **characterized in that** the magnetic pole position detecting sensor (6) is arranged at one end of a rotor shaft (9) and the brush (12) is arranged at the other end thereof, respectively.

4. The vehicular starting and charging rotary electric machine according to any one of claims 1 and 2, **characterized in that** the brush (12) is arranged on an inner side of the bracket (5).

5. The vehicular starting and charging rotary electric machine according to any one of claims 1 and 2, **characterized in that** the brush 812) is arranged on an outer side of the bracket (5).

6. The vehicular starting and charging rotary electric machine according to any one of claims 1 to. 5, **characterized by** further comprising a brush holder (12a) fixed to the bracket (5), wherein the brush holder (12a) for holding the brush (12) is constituted to be capable of interchanging the brush 812) detachably from a diameter direction thereof.

7. The vehicular starting and charging rotary electric machine according to any one of claims 1 to 6, **characterized in that**:
the stator winding (3a) of the stator (3) includes a coil end extended outwardly from an end face of a stator core;
the coil end is arranged by aligning the stator core (3b) in a peripheral direction.

8. The vehicular starting and charging rotary electric machine according to claim 7, **characterized in that** the stator winding (3a) of the stator (3) is constituted by connecting a plurality of conductor segments (31).

9. The vehicular starting and charging rotary electric machine according to claim 7, **characterized in that**:
the stator winding (3a) of the stator (3) includes a plurality of windings folded back at outside of a slot (3d) on a side of the end face of the stator core (3b) and wound to alternately take an inner layer and an outer layer in a slot depth direction at inside of the slot (3d) at every predetermined number of the slots; and
portions of turning the coil wires folded back at outside of the slots (3d) on the side of the end face of the stator core (3b), are aligned in the peripheral direction to constitute a group of the coil ends.

## Patentansprüche

1. Rotierende elektrische Fahrzeug-Start- und Lade-Maschine, die als eine Elektromaschine oder Generatormaschine dient, mit:
einem Rotor (2) mit einer Feldwicklung (2a);
einem Stator (3) mit einer Ständerwicklung (3a);
einem Träger (5) zum Stützen des Rotors (2) und des Stators (3);
einer Bürste (18), deren eines Ende mit dem Rotor (2) in Kontakt gebracht ist, zum Zuführen eines Feldstroms an die Feldwicklung (2a) des Rotors (2); und
einem Magnetpolpositions-Erfassungssensor (6), der koaxial mit einer Rotationswelle (9) des Rotors (2) angeordnet ist, zum Erfassen einer Magnetpolposition des Rotors (2) und Funktionieren,
**dadurch gekennzeichnet, dass** der Magnetpolpositions-Erfassungssensor (6) an dem Träger (5) derart integriert befestigt ist, dass die Bürste (12) entfernbar ist ohne den Magnetpolpositions-Erfassungssensor (6) von dem Träger (5) abzunehmen.

2. Rotierende elektrische Fahrzeug-Start- und Lade-Maschine nach Anspruch 1, **dadurch gekennzeichnet, dass** der Magnetpolpositions-Erfassungssensor (6) an einer Außenseite in einer axialen Richtung der Bürste (12) angeordnet ist.

3. Rotierende elektrische Fahrzeug-Start- und Lade-Maschine nach Anspruch 1, **dadurch gekennzeichnet, dass** der Magnetpolpositions-Erfassungssensor (6) an einem Ende von einer Rotorwelle (9) angeordnet ist beziehungsweise die Bürste (12) an dem anderen Ende davon angeordnet ist.

4. Rotierende elektrische Fahrzeug-Start- und Lade-Maschine nach Anspruch 1 oder 2, **dadurch gekennzeichnet, dass** die Bürste (12) an einer Innenseite des Trägers (5) angeordnet ist.

5. Rotierende elektrische Fahrzeug-Start- und Lade-Maschine nach Anspruch 1 oder 2, **dadurch gekennzeichnet, dass** die Bürste (12) an einer Außenseite des Trägers (5) angeordnet ist.

6. Rotierende elektrische Fahrzeug-Start- und Lade-Maschine nach einem der Ansprüche 1 bis 5, **dadurch gekennzeichnet, dass** sie ferner einen Bürstenhalter (12a) umfasst, der an dem Träger (5) befestigt ist,
wobei der Büstenhalter (12a) zum Halten der Bürste (12) so gebildet ist, dass er in der Lage ist die Bürste (12) abnehmbar von einer Durchmesserrichtung davon auszutauschen.

7. Rotierende elektrische Fahrzeug-Start- und Lade-Maschine nach einem der Ansprüche 1 bis 6, **dadurch gekennzeichnet, dass**:
die Ständerwicklung (3a) des Stators (3) ein Spulenende umfasst, das sich nach außen von einer Endfläche eines Statorkerns erstreckt;
wobei das Spulenende durch Ausrichten des Statorkerns (3b) in einer Umfangsrichtung angeordnet ist.

8. Rotierende elektrische Fahrzeug-Start- und Lade-Maschine nach Anspruch 7, **dadurch gekennzeichnet, dass** die Ständerwicklung (3a) des Stators (3) durch Verbinden einer Vielzahl von Leitersegmenten (31) gebildet ist.

9. Rotierende elektrische Fahrzeug-Start- und Lade-Maschine nach Anspruch 7, **dadurch gekennzeichnet, dass**:
die Ständerwicklung (3a) des Stators (3) eine Vielzahl von Wicklungen umfasst, die an einer Außenseite eines Schlitzes (3d) auf einer Seite der Endfläche des Statorkerns (3b) umgebogen und gewickelt sind, um wechselweise eine innere Lage und eine äußere Lage in einer Schlitz-Tiefenrichtung an einer Innenseite des Schlitzes (3d) bei jeder vorbestimmten Anzahl der Schlitze einzunehmen; und
wobei Wendeabschnitte der Spulendrähte, die an der Außenseite der Schlitze (3d) auf der Seite der Endfläche des Statorkerns (3b) umgebogenen sind, in der Umfangsrichtung ausgerichtet sind, um eine Gruppe der Spulenenden zu bilden.

## Revendications

1. Machine électrique tournante pour charger et démarrer (1) un véhicule servant de machine électrique ou de machine génératrice, comprenant :
un rotor (2) ayant un enroulement de champ (2a) ;
un stator (3) ayant un enroulement de stator (3a) ;
une console (5) pour supporter le rotor (2) et le stator (3),
un balai (18) dont une extrémité est amenée en contact avec le rotor (2) pour amener le courant de champ à l'enroulement de champ (2a) du rotor (2) ; et
un capteur de détection de position de pôle magnétique (6) agencé de manière coaxiale avec un arbre de rotation (9) du rotor (2), pour détecter une position de pôle magnétique du rotor (2) et fonctionner,
**caractérisée en ce que** le capteur de détection de position de pôle magnétique (6) est fixé de manière solidaire à la console (5) de sorte que le balai (12) est amovible sans détacher le capteur de détection de position de pôle magnétique (6) de la console (5).

2. Machine électrique tournante pour charger et démarrer un véhicule selon la revendication 1, **caractérisée en ce que** le capteur de détection de position de pôle magnétique (6) est agencé sur un côté externe dans une direction axiale du balai (12).

3. Machine électrique tournante pour charger et démarrer un véhicule selon la revendication 1, **caractérisée en ce que** le capteur de détection de position de pôle magnétique (6) est agencé au niveau d'une extrémité d'un arbre de rotor (9) et le balai (12) est agencé au niveau de son autre extrémité, respectivement.

4. Machine électrique tournante pour charger et démarrer un véhicule selon l'une quelconque des revendications 1 et 2, **caractérisée en ce que** le balai (12) est agencé sur un côté interne de la console (5).

5. Machine électrique tournante pour charger et démarrer un véhicule selon l'une quelconque des revendications 1 et 2, **caractérisée en ce que** le balai (812) est agencé sur un autre côté de la console (5).

6. Machine électrique tournante pour charger et démarrer un véhicule selon l'une quelconque des revendications 1 à 5, **caractérisée en ce qu'**elle comprend en outre un porte-balai (12a) fixé à la console (5),
dans laquelle le porte-balai (12a) pour maintenir le balai (12) est constitué pour pouvoir interchanger le balai (812) de manière détachable à partir de sa direction diamétrale.

7. Machine électrique tournante pour charger et démarrer un véhicule selon l'une quelconque des revendications 1 à 6, **caractérisée en ce que** :
l'enroulement de stator (3a) du stator (3) comprend une extrémité de bobine étendue vers l'extérieur à partir d'une face d'extrémité d'un noyau de stator ;
l'extrémité de bobine est agencée en alignant le noyau de stator (3b) dans une direction périphérique.

8. Machine électrique tournante pour charger et démarrer un véhicule selon la revendication 7, **caractérisée en ce que** l'enroulement de stator (3a) du stator (3) est constitué en raccordant une pluralité de segments conducteurs (31).

9. Machine électrique tournante pour charger et démarrer un véhicule selon la revendication 7, **caractérisée en ce que** :
l'enroulement de stator (3a) du stator (3) comprend une pluralité d'enroulements repliés à l'extérieur de fente (3d) sur un côté de la face d'extrémité du noyau de stator (3b) et enroulés pour prendre de manière alternée une couche interne et une couche externe dans une direction de profondeur de fente à l'intérieur de la fente (3d) selon chaque nombre prédéterminé de fentes ; et
des parties pour retourner les fils de bobine à l'extérieur des fentes (3d) sur le côté de la face d'extrémité du noyau de stator (3b), sont alignées dans la direction périphérique pour constituer un groupe d'extrémités de bobine.
